# EUROPEAN PATENT APPLICATION

(11) **EP 1 531 595 A1**
(43) Date of publication of application: **18.05.2005**
(21) Application number: 03292842.6
(22) Date of filing: 17.11.2003
(51) Int. Cl.: H04L 29/06

(54) **Communication system and method supporting format conversion and session management**

(71) Applicant: Hewlett-Packard Development Company, L.P., Houston, Texas 77070 (US)
(72) Inventor: Hyerle, Robert, 38190 Bernin (FR); O'Connell, John, 38000 Grenoble (FR); Brandt, Marc, 38320 Eybens (FR); Pedersen, Claus, 38610 Venon (FR); Boudalier, Pascal, 38330 Saint Ismier (FR)
(74) Representative: Lloyd, Richard Graham

(57) **Abstract**

Embodiments provide a communication method; the method comprising the steps of processing first data received from a first device; the data being associated with a first target device of an addressee; and processing second data received from the first device; the second data being associated with a second target device of an addressee. This method allows to convert the format of data exchanged between devices, e.g. between text and speech according to user preferences. It also allows to manage sessions spanning over several separated communication exchanges, including maintaining historical data associated with these exchanges.

## Description

### Field of the Invention

The present invention relates to a communication system and method.

### Background to the Invention

Communication within the world today is easier now than it has ever been. Users or subscribers have various ways of contacting each other and accessing and consuming services that are offered by, for example, call centres and the Internet. It is possible using a mobile phone to contact a colleague almost anywhere in the world by dialling the MSISDN of their mobile phone.

Using interactive voice response units, it is possible to conduct transactions such as, for example, obtaining an up to date statement of one's bank account or setting up a standing order using DTMF keys of the telephone. Furthermore, one can settle bills or other outstanding accounts using the telephone. However, in each case, the user of the above devices must call a specific number or access a specific web-address to perform the service or to contact an addressee. In essence, the user always needs to call an end point. Furthermore, while many of the current systems are significantly improved over systems that existed a decade ago, they still have limitations. For example, current systems do not take account of the context of a communication. They also do not seem to take account of the fact that a user has many devices they can use to communicate or preferences associated with those devices or communications. Accordingly, the user is not afforded the rich communication experience that might be possible using the various devices in a concerted manner according to a context that prevails at any given time.

It is an object of embodiments of the present invention at least to mitigate some of the problems of the prior art.

### Summary of Invention

Accordingly, a first aspect of embodiments of the present invention provides a communication method comprising the steps of processing first data received from a first device; the first data being associated with the first target device of an addressee; and processing second data received from the first device; the second data being associated with a second target device of the addressee.

Advantageously, the user or addressee can switch between communication devices midway through any given communication. This multi-modal arrangement provides the subscriber or consumer with significant flexibility when communicating with a colleague or when consuming or establishing a network service.

Preferably, embodiments provide a communication method comprising the step of creating session data or identification data associated with at least one of the first, second and target devices. Preferably, the session data is persistent in that it spans a number of separate communications using the at least one of the first, second and target devices.

Embodiments provide a communication method in which the step of creating session data or identification data comprises the step of maintaining at least historical data associated with a communication exchange. Preferably, the step of maintaining at least the historical data comprises the step of recording data associated with at least two separate communication exchanges spanning a period of time.

Suitably, a communication context can be maintained that spans or comprises a number of communications. For example, a subscriber or an addressee might have session data that relates to their washing machine. The session data might comprise the history of exchanges between the subscriber, as owner of the washing machine, and the supplier of the washing machine. A first exchange between the supplier of washing machines and a perspective owner of a washing machine might be the initial purchase of the washing machine. A subsequent exchange between the owner and supplier might relate to servicing of the washing machine at regular intervals and the final communication or exchange between the owner and supplier might relate to disposal of that washing machine and, perhaps, the acquisition of a new or replacement washing machine. It can, therefore, be appreciated that the session data maintains context information relevant to an exchange between two parties or relevant to the consumption of network provided services.

Preferred embodiments provide a communication method comprising the step of transforming at least one of the first and second data into a format compatible with at least one of the first and second target devices. Preferably, the step of transforming comprises the step of converting data representing a visual communication to data representing an audible communication. In preferred embodiments, the step of converting comprises the step of converting data representing text to data representing speech.

Advantageously, embodiments of the present invention allow an addressee or subscriber significant choice in the type of device via which they wish to an effect communications. For example, if the incoming message is an email and the subscriber only has access to their mobile telephone at the time when they wish to read their emails, the incoming email can be converted to speech and output via the conventional mobile telephone. Conversely, the reverse applies, that is, a reply to the email can be constructed using speech-to-text software. This allows the subscriber or addressee, who only has access to a mobile phone, to respond to communications that have a different format such as the text format of the email.

Preferred embodiments provide a communication method in which the step of processing the second data comprises the step of receiving command data from the first target device of the addressee; the command data comprising an instruction to switch from a mode of communication that uses the first target device to a mode of communication that uses the second target device for subsequent communication exchanges.

Alternatively, or additionally, embodiments provide a method in which the step of processing the second data received from the first device is responsive to at least one user preference. Advantageously, user preferences and preferred user contexts can be accommodated by embodiments of the present invention to tailor the delivery of network services and communications to the needs of the user. Also, embodiments, using the user preferences or preferred contexts, support mediation between the subscriber or user and a network service or third party attempting communication with that user.

A second aspect of embodiments of the present invention provides a communication method comprising the step of establishing session or identification data associated with a context of at least a first communication exchange between a first device of a subscriber and a further communication device; maintaining the session or identification data in response to a further communication exchange with a second communication device of the subscriber.

Suitably, the context of any on-going communication can be maintained even though a subscriber or consumer of network services has changed the communication device via which they wish to interact with third parties or service providers.

### Brief Description of the Drawings

Embodiments of the present invention will now be described, by way of example only, with reference to the accompanying drawings in which:
figure 1 shows a communication arrangement;
figure 2 shows a communication system according to an embodiment;
figure 3 illustrates part of a data base according to an embodiment;
figure 4 shows a flowchart of multi-modal operation according to an embodiment; and
figure 5 illustrates a flowchart for managing session data according to an embodiment.

### Detailed Description of the Preferred Embodiments

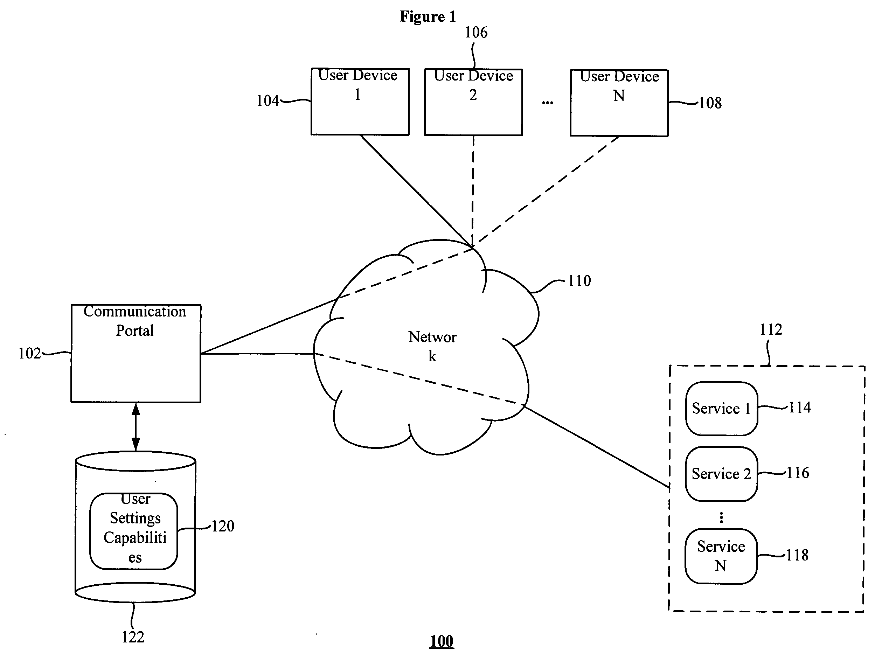

Referring to figure 1, there is shown a communication arrangement 100 in which a communication portal 102 is used as a central contact point via which a number of third parties (not shown), using their respective communication devices, can contact an addressee or subscriber. More particularly, the communication device or a number of communication devices of the addressee or subscriber can be contacted via the communication portal 102. For the purposes of illustration the addressee or subscriber is shown as having N communication devices; namely, a first device 104, a second device 106 and an Nth device 108. The N devices might comprise, for example, a mobile telephone, a laptop or other computer, a PDA or other communication device.

The communication portal 102 and the various devices interact via a network 110. The users of respective devices (not shown) can either communicate via the portal 102 with the subscriber via the subscriber's devices 104 to 108. Alternatively, or additionally, the owner of the devices 104 to 108 can consume various services 112 that are accessible via the network 110. For the purpose of illustration three services have been shown; namely a first service 114, a second service 116 and an Nth service 118. It will be appreciated that the number of available services might vary from time to time. The services might be, for example, a banking service, a shopping service or other service.

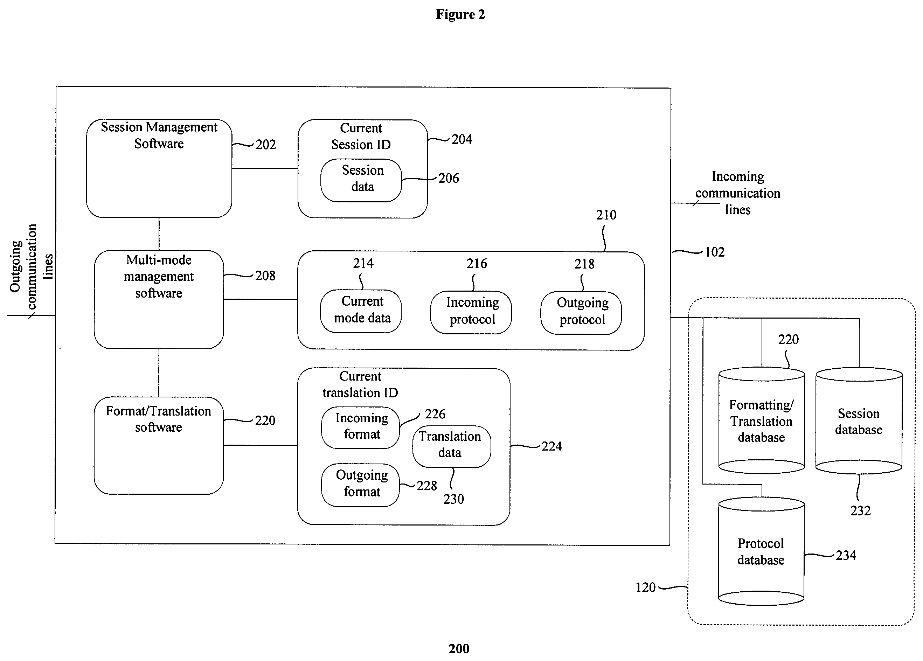

The portal 102 uses a database 120 of subscriber settings to influence the interaction between the subscriber and any calling or called third party. Furthermore, the database 120 is stored using non-volatile storage 122 such as, for example, an HDD. The subscriber settings might comprise context preference settings that influence the interaction of the user with a third party or a consumed network service. For example, the user might specify in their preferences that all email communications should be forwarded to their mobile phone in the form of a text message or a voice message. Alternatively, or additionally, the subscriber might specify that only a portion of the emails received by the portal on behalf of the subscriber is forwarded to a nominated device such as, for example, their mobile phone. For example, the settings might prescribe that only the subject line of any email is forwarded to the mobile phone. Also, the form in which that portion of the email is forwarded can also be determined or controlled in response to user preferences or a user context. Effectively, embodiments allow the subscriber to tailor receiving and sending communication data via the portal according to their preferences. The user preferences work in conjunction with formatting/translation software (described with reference to figure 2) to ensure that effect is given to the user preferences. It will be appreciated that such user-centric modes of operating provide the user with significant flexibility in, and control over, their modes of communication.

In operation, the subscriber uses any one of their available devices 104 to 108 to consume or access any one of the available network services 114 to 118 or to contact a third party by calling or accessing the communication portal 102 or by receiving communications via the communication portal 102. Calling or accessing the communication portal 102 can be effected in one of at least two ways. Firstly, the communication portal 102 might have a device specific communication line via which a respective device can contact the communication portal 102. For example, the communication portal 102 might have an associated telephone number that can be used by a telephone communication device to access the communication portal 102. Therefore, if, for example, the first communication device 104 of the subscriber is a mobile telephone, the subscriber can use that mobile telephone to access the communication portal 102 by calling an appropriate telephone number of the communication portal 102. Alternatively, or additionally, it will be appreciated that each of the communication devices uses an end point to identify or contact the person or service with whom they wish to communicate. In the case of, for example, mobile telephony, the subscriber might use their mobile telephone to call another mobile telephone by dialling the MSISDN of the called mobile telephone. Rather than the MSC, within a GSM context, forwarding the call set up data of the called MSISDN to an MSC, if appropriate, the HLR of the calling mobile station can be arranged to redirect the call to the communication portal 102, which can then handle any subsequent exchange between the subscriber and the called party or service. Furthermore, the HLR of the mobile station of the subscriber can be arranged to ensure that all calls to the subscriber's mobile station are redirected or forwarded to the communication portal 102.

It will be appreciated that the above might also apply to IP addresses. In effect, all outgoing TCP/IP communications from a device of a subscriber are routed to the communication portal 102 either directly by ensuring that redirection takes place within the device of the subscriber such as, for example, within their computer, or by ensuring that the servers forming part of the network recognise that all communications associated with a particular IP address, which is the IP address of the subscriber's communication device, are routed to the communication portal 102 for subsequent processing. Preferably, the converse also applies, that is, all communications having the subscriber's device IP address as a destination IP address will be appropriately redirected to the portal 102.

Preferably, all servers that encounter the IP address of a device of the subscriber should route communications intended for that device to the communication portal 102, which can then forward a message accordingly having processed that message if appropriate.

It will be appreciated that the communication portal 102 acts as a continuously present or continuously connected proxy for the subscriber or, more particularly, for the communication devices of the subscriber. This allows communications intended for the subscriber to be received and stored for later retrieval in the event that the communication portal 102 determines that the appropriate device corresponding to the incoming message is switched off or is otherwise unavailable or that communication with the current device being used by the subscriber is unsupported. For example, in an exchange between a laptop computer, which might be the second subscriber's device 106, an email sent by the subscriber using the second communication device 106 is sent to the communication portal 102, that is, it is redirected to the communication portal 102 rather than being sent to a conventional mail server or the server redirects the email to the communication portal using, for example, IP address re-direction as described in, for example, the Mobile IP ITEF standard. The communication portal 102 forwards the message to the appropriate IP address or, at least, is instrumental in forwarding the message to the corresponding destination IP address.

If the servers (not shown) of the network 110 encounter a message destined for the laptop 106 of the subscriber, the servers are arranged to redirect communications using the IP address of the subscriber's laptop 106 to the communication portal 102. Thereafter, the communication portal 102 can forward the IP communication to the appropriate device.

Referring to figure 2 there is shown the combination 200 of the portal 102 and the non-volatile storage 122 that stores the databases, which are generically referred to by reference numeral 120.

The communication portal 102 comprises a number of software elements. Session management software 202 is used to maintain session or identification data on behalf of a subscriber in relation to respective communications. In the illustrated embodiment, the session or identification data is illustrated as comprising a current session identifier 204 that contains, or references session data 206. The current session identifier 204 is used by the session management software 202 to access the session data 206 to allow that session data 206 to be modified, or updated, in response to exchanges between a third party and the subscriber according to a given context. In preferred embodiments, the session data comprises session information that can relate to one or more input devices and one or more output devices.

The multi-mode management software 208 is operable to support the use of multiple communication devices by the subscriber according to the desires or demands of the subscriber. The multi-mode management software 208 uses multi-mode operational data 210. The multi-mode operational data 210 comprises respective identifiers. The identifier might be unique to subscribers. In preferred embodiments, the identifier is unique to a subscriber's session. The multi-mode operational data 210 comprises current mode data 214, which is a record of the type of communication device currently being used by the subscriber and the type of communication device or service with which the subscriber is interacting. Incoming protocol data 216, forming part of the multi-mode operational data 210, is a record of the communication protocol used by the current device of the subscriber. The multi-mode operational data 210 also comprises outgoing protocol data 218 that reflects the communication protocol supported by the communication device or service with which the subscriber's communication device is interacting. For example, the current mode data 214 might be "*device type: GSM mobile phone" .* The incoming protocol data 216 would then be a reference to the air interface, or other interface, of the GSM standards. Assuming the subscriber is responding to an email, the outgoing protocol data might be, for example, *"email:SMTP".*

The communication portal 102 also comprises format/translation software 220 that is arranged to convert, or translate, data received by or sent to the subscriber or received by or sent to another device or service on behalf of the subscriber into appropriate formats. For example, if the subscriber is using their GSM mobile telephone to communicate and the incoming communication is an email, a formatting/translation database protocol (not shown) for converting between email communications and voice communications is accessed by the format/translation software 220 to convert the received email into a form suitable for display or output by the GSM phone. It will be appreciated that the translation of the email message to a form suitable for output by the GSM phone might comprise, for example, reformatting of the text of the email so that it is suitable for display on an LCD of the GSM mobile phone. Alternatively, or additionally, the translation process might comprise converting the text of the email to speech via a text-to-speech processing engine (not shown).

The format/translation software 220 maintains a record 224 of the formats used by the current device of the subscriber and those of the device or service with which the subscriber is interacting. The record 224 comprises incoming format data 226 that describes the format of the data being received from, or output to, the subscriber's current communication device. The record 224 also comprises outgoing format data 228 that contains an indication of the format of the data received from, or to be output to, the device or service with which the subscriber is interacting. The record 224 also comprises translation data 230 for converting between the data formats described by the incoming format data 226 and the outgoing format data 228. The translation data might, in preferred embodiments, take the form of XML.

Furthermore, the translation software might also give effect to changes in presentation styles of information. Still further, the format and translation software can be arranged to convert between languages automatically. Therefore, an email written in, for example, French might be automatically converted to, for example, English. Any such conversion could optionally be at the request of the subscriber and can be arranged to be on a per device, per session, per communication basis or any other basis. The need or request for conversion can be persistent, that is, it spans more than one communication, device or session, or ephemeral in that it lasts only for the duration of any given communication, device usage or session.

It will be appreciated that the term *"incoming"* is used to describe data output to, or received from, the subscriber's current communication device. It will also be appreciated that the term *"outgoing"* is used to describe data received from, or output to, the device or service with which the subscriber is interacting.

It will be appreciated that, in preferred embodiments, the session management software 202, the multi-mode management software 208 and the format/translation software 220 will deal substantially simultaneously with session data, multi-mode operational data and translation data for a number of communication devices. The number of communication devices might belong to the above described subscriber or to respective subscribers. Therefore, the user database 120 also comprises a session database 232 that contains the session data for all subscribers currently using the communication portal 102. Furthermore, a protocol database 234 is used to store a description of the protocols that the communication portal 102 might be expected to use during any session or exchange with a subscriber or third party device or service with which the subscriber's device is interacting. For example, the protocol database 234 might contain information relating to SMTP, HTML, GSM, CDMA2000, RTSP, H.232, RTP or any other protocol. It will be appreciated that other communication protocols might also be supported according to the needs of the subscribers.

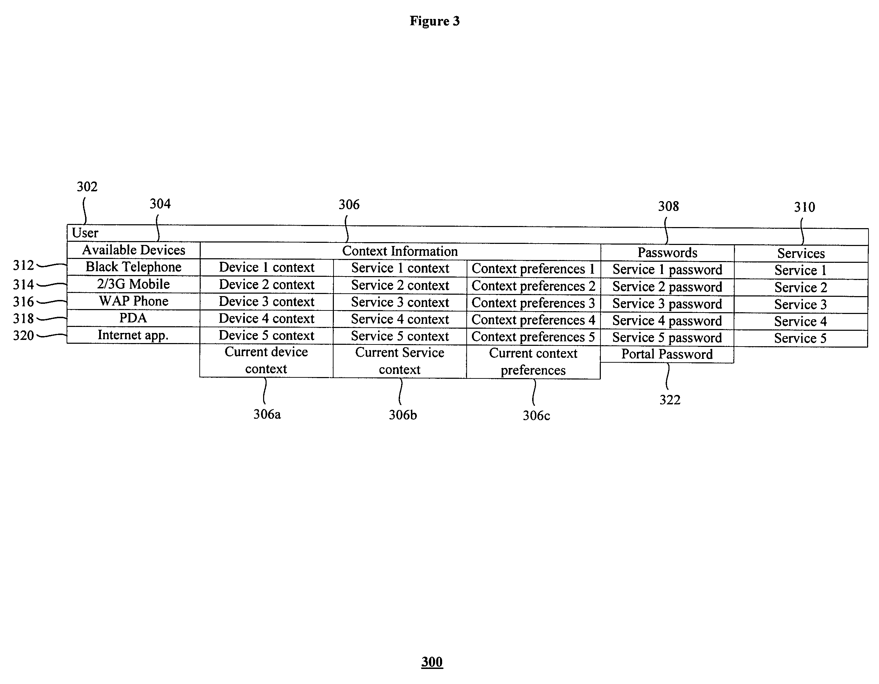

Figure 3 shows a table 300 of data that is stored within the user database 120. The table 300 contains data associated with a user or subscriber. It can be appreciated that the table has a user identifier 302, an *"Available Devices"* column 304, a *"Context Information"* column 306, a *"Passwords"* column 308 and a *"Services"* column 310.

The *"Available Devices"* 304 contains an indication of the communication devices that are registered by the subscriber as being available for use, at the subscriber's discretion, from time to time to support communications. It can be appreciated in the embodiment shown that the available devices are indicated as comprising a black telephone 312, a 3G- mobile telephone 314, a WAP telephone 316, a PDA 318 and an Internet-enabled device such as, for example, a laptop, or other computer, having some form of web-browser.

The *"Context Information"* column 306 comprises an indication of the current device context, current service context and current context preferences for each of the devices specified in the *"Available Devices"* column 304. The *"Context Information"* column 306 also comprises an indication of the current device context 306a, current service context 306b and current context preferences 306c for the device currently being used by the user identified by the user ID 302.

The *"Passwords"* column 308 comprises a number of passwords for respective services to allow the user to automatically log onto or engage with those services together with a portal password 322 via which the user can gain access to and interact with the communication portal 102.

The *"Services"* column 310 comprises an indication of the services that are available to the user identified by the user ID 302. The services might be device specific or device independent.

The user settings enable user-centric communications, in terms of format and mode, to be established and maintained on behalf of the subscriber. If a user prefers to perform an action using a particular device, the communication portal, using the user preferences, can accommodate that preference. For example, the user might prefer to use their computer to dial a telephone number but to have the call itself handled by the telephone. A further example might be that the user prefers to complete web-forms using their phone, that is, orally, rather than using a keyboard. Suitably, the user preferences would indicate that whenever the communication portal 102 encounters a web-form to be completed, the subscriber's telephone should be contacted and the voice data sent to the portal 102 via that telephone should be converted to text and appropriately placed within the web-form.

The user preferences are also preferably such that the context of any given session is maintained, which allows the user to continue interacting with the other parties to the session in their preferred manner.

It will be appreciated that the user-centric preferences can be changed according to the desires of the user. Therefore, the user has the ability to switch between their various devices to interact with the various services according to their preferred mode of operating.

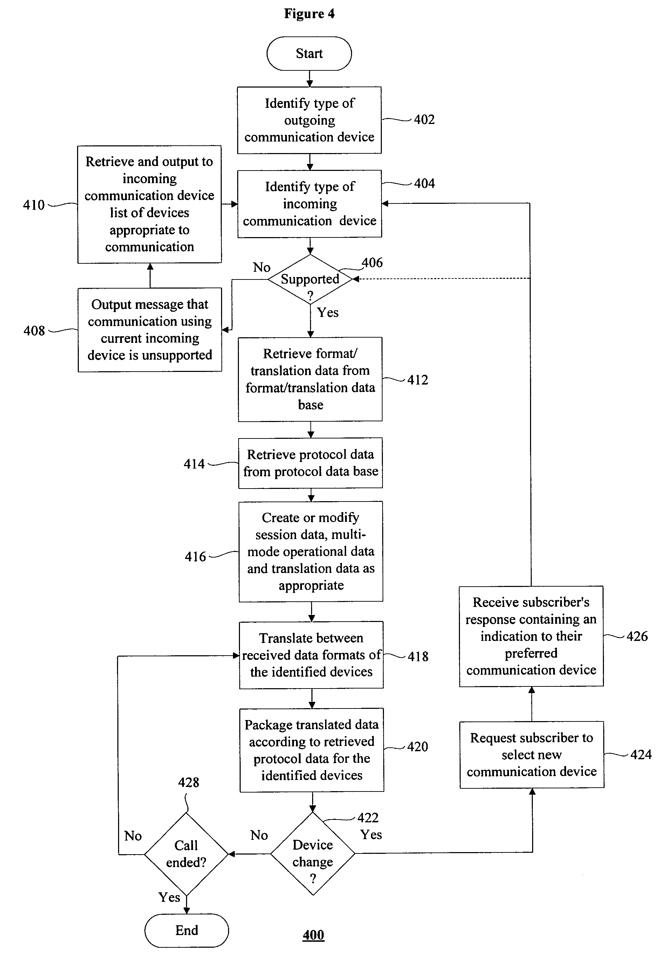

Figure 4 shows a flowchart 400 for accommodating multi-modal operation according to an embodiment. The type of the outgoing communication device is identified at step 402. The type of the incoming communication device used by the subscriber is identified at step 404. A determination is made at step 406 as to whether or not the communication portal 102 supports communication exchanges between the devices of the identified types. If the determination at step 406 is that the communication portal 102 does not support communication exchanges between devices of the identified types, a message to that effect is output at step 408. Thereafter, the communication portal 102 retrieves and outputs to the incoming communication device a list of the subscriber's devices that are supported for communication exchanges with the outgoing communication device at step 410, after which processing returns to step 404 to identify the device newly selected by the subscriber for the exchange.

If it is determined at step 406 that communication between devices of the types identified is supported, format/translation data is retrieved from the formatting/translation database 220 at step 412. Protocol data relevant to the devices to be used in the communication is retrieved, at step 414, from the protocol database 234. At step 416, current session data 204, current multi-modal operational data 210 and current translation data 224 are created, if this is the first exchange between the subscriber and the calling party or service according to, preferably, a given context. However, if this is a subsequent exchange, step 416 merely modifies the session data 204, current multi modal operational data 210 or current translational data 224 as appropriate.

During the communication exchange, the communication portal 102, using the format/translation software 220 translates the data received from the identified devices into formats appropriate for the other device at step 418. The newly translated data is packaged, at step 420, according to the protocol data retrieved at step 414 and the packaged data is transmitted to the respective devices.

A determination is made at step 422 as to whether or not the subscriber has requested a change of communication device. If the determination at step 422 is that the subscriber has requested a change of communication device, control is transferred to step 424 where the subscriber is asked to provide an indication of the type of communication device they would like to use for the communication. The subscriber's response to the invitation issued at step 424 is determined at step 426 after which control is transferred to step 404. Alternatively, control can be transferred to step 406 after step 426 as indicated by the dashed line.

If the determination at step 422 is that there has not been a change of device, a determination is made at step 428 of whether or not the call has been terminated by either party. If the call has been terminated by either party, processing terminates otherwise control is transferred to step 418.

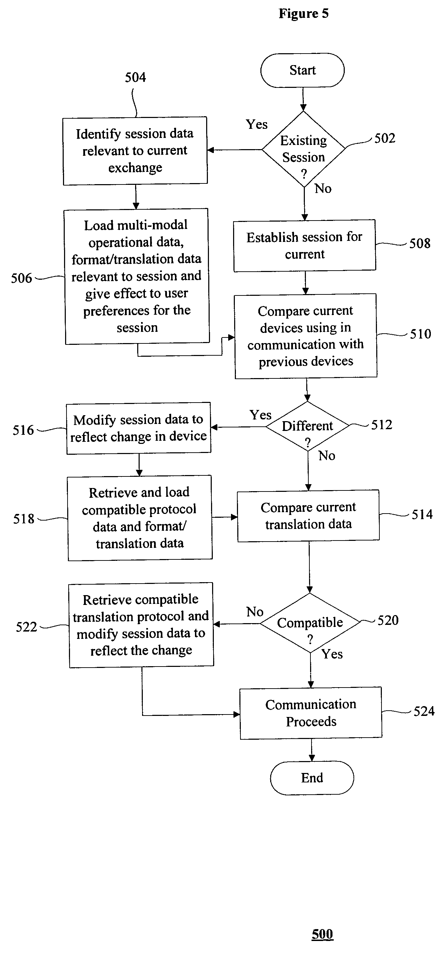

Referring to figure 5, there is shown a flowchart 500 for establishing or maintaining session data according to an embodiment. A determination is made at step 502 as to whether or not existing session data is relevant to a current communication. If the determination is that the session data 206 for the current communication already exists, that session data is identified at step 504. The session data 206 for the session identified at step 504 is retrieved from the session database 232, at step 506, and effect is given to that session data 206 once it has been loaded. For example, the format translation data relevant to the session is retrieved from the formatting translation database 220. Also, the protocols relevant to the devices used in the session are retrieved from the protocol database 234 and effect is also given to user or subscriber preferences. Control then passes to step 510.

However, if the determination at step 502 is negative, session data 206 and a current session identifier 204 are established at step 508. At step 510 a comparison is made between the current communication devices used in the communication with the communication devices identified in the session data as having previously been used. A determination is made as to whether or not those devices are different at step 512. If the compared devices are the same, processing is transferred to step 514. However, if the comparison at step 512 shows that the devices are different, the session data is modified, at step 516, to reflect the change in devices used in the communication. The protocol data 216 and 218 and translation data 230 relevant to the devices used in the communication are retrieved and made effective at step 518, after which control then passes to step 514.

At step 514, a comparison is made between the translation data identified by the session data and the needs of the current devices used in the communication. If the comparison shows that the previously stored session data and the needs of the current devices are incompatible, which determination is made at step 520, compatible translation protocols are retrieved at step 522 to reflect the needs of the communication devices and the session data 206 is modified accordingly. Thereafter, or after step 520, the communication proceeds as usual at step 524.

In preferred embodiments, the context of a communication is maintained for any given session as well as, or as an alternative to, a communication context being maintained or managed on a per communication device basis. For example, if the subscriber usually receives emails via a combination of the subject line being sent to their mobile and the remainder of the email being sent to their computer or some other device, but while last in the washing machine session the subscriber requested that emails be converted to speech, the portal, having maintained an indication of the past history of exchanges, can automatically convert emails to speech for any email communications received from the vendor of, or maintenance person for, the washing machine. Effectively, the subscriber preferences might be effective on a per device basis, a per communication basis, a per session basis or any other basis according to the subscriber's wishes.

Although the above embodiments have been described with reference to a subscriber interacting with the portal 102, embodiments are not limited to such an arrangement. Embodiments can be realised in which a communication involves more than one subscriber or multiple parties on behalf of whom the portal mediates or acts. Each party to a communication or session might have equal or different access or change rights over (a) how they or the other parties interact with the portal, (b) any given session or (c) any given communication. By controlling the communications between multiple subscribers and any third party or parties or network service or services, it is possible to have multiple communication channels to the respective subscriber's that carry either the same or different information. For example, sensitive or confidential information that relates to only one or a limited number of the subscribers might be sent to the portal during any given communication received from a third party or network service. Accordingly, that sensitive or confidential information is only directed to the appropriate addressee or addressees.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A communication method; the method comprising the steps of processing first data received from a first device; the data being associated with a first target device of an addressee; and processing second data received from the first device; the second data being associated with a second target device of an addressee; the first and second data belonging to a respective context.

2. A communication method as claimed in claim 1 further comprising the step of transforming at least one of the first and second data into a format compatible with at least one of the first and second target devices respectively.

3. A communication method as claimed in claim 2 in which the step of transforming comprises the step of converting data representing a visual communication to data representing an audible communication.

4. A communication method as claimed in claim 3 in which the step of converting comprises converting between data representing text and data representing speech.

5. A communication method as claimed in any preceding claim in which the step of processing the second data comprises the step of receiving command data from the first communication device of the addressee; the command data comprising an instruction to switch to a mode of communication using the second device as the addressee or source of subsequently received data.

6. A communication method as claimed in any preceding claim comprising the step of creating session data or identification data associated with the first and second communication devices of the addressee.

7. A communication method as claimed in claim 6 in which the step of creating the session data or the identification data comprises the step of maintaining at least historical data associated with a communication exchange.

8. A communication method as claimed in claim 7 in which the step of maintaining at least the historical data comprises the step of recording data of at least two separate exchanges spanning a period of time.

9. A communication method; the method comprising the step of establishing session or identification data associated with a context of at least a first communication exchange between the first device of a subscriber and a further communication device; maintaining the session or identification data in response to a further communication exchange, having the same context, with a second communication device.

10. A communication method as claimed in claim 9 comprising the step of creating session data or identification data associated with the first and second communication devices of the addressee.

11. A communication method as claimed in claim 10 in which the step of creating the session data or the identification data comprises the step of maintaining at least historical data associated with a communication exchange.

12. A communication method as claimed in claim 11 in which the step of maintaining at least the historical data comprises the step of recording data of at least two separate exchanges spanning a period of time.

13. A communication system comprising means to implement a method as claimed in any preceding claim.

14. A computer program comprising code to implement as system or method as claimed in any preceding claim.

15. A product comprising storage storing a computer program as claimed in claim 14.
